# EUROPÄISCHE PATENTSCHRIFT

(11) **EP 2 188 148 B1**
(45) Veröffentlichungstag und Bekanntmachung des Hinweises auf die Patenterteilung: **07.08.2013**
(21) Anmeldenummer: 08801740.5
(22) Anmeldetag: 28.08.2008
(51) Int. Cl.: B60N 2/08

(54) **VERSTELLEINRICHTUNG ZUR LÄNGSVERSTELLUNG EINER KRAFTFAHRZEUGKOMPONENTE**
ADJUSTING DEVICE FOR THE LONGITUDINAL ADJUSTMENT OF AN AUTOMOTIVE COMPONENT
DISPOSITIF DE RÉGLAGE POUR LE RÉGLAGE LONGITUDINAL D'UN COMPOSANT DE VÉHICULE AUTOMOBILE

(30) Priorität: 07.09.2007 DE 102007042595
(43) Veröffentlichungstag der Anmeldung: 26.05.2010
(73) Patentinhaber: Johnson Controls GmbH, 51399 Burscheid (DE)
(72) Erfinder: ZACHARIAS, Michael, 42799 Leichlingen (DE); SCHMALE, Uwe, 42499 Hückeswagen (DE); STEMMER, Jürgen, 42897 Remscheid (DE); GIORGIO, Denis, 42899 Remscheid (DE)
(74) Vertreter: Schwöbel, Thilo K.
(86) Internationale Anmeldenummer: PCT/EP2008/007055
(87) Internationale Veröffentlichungsnummer: WO 2009/033570

(56) Entgegenhaltungen:
- WO-A-2006/053145
- DE-C1- 4 242 895
- DE-C1- 19 824 038

## Beschreibung

Die vorliegende Erfindung geht aus von einer Verstelleinrichtung zur Längsverstellung einer Kraftfahrzeugkomponente, insbesondere eines Fahrzeugsitzes, wobei die Verstelleinrichtung eine in Verstellrichtung angeordnete obere Längsschiene und eine in Verstellrichtung angeordnete untere Längsschiene aufweist, wobei die Verstelleinrichtung eine Verriegelungseinrichtung derart aufweist, dass durch Verriegelung der Verriegelungseinrichtung eine Relatiwerstellung der Längsschienen gegeneinander blockierbar ist und durch Entriegelung der Verriegelungseinrichtung die Verriegelung der Längsschienen aufhebbar ist, wobei die Verriegelungseinrichtung eine Mehrzahl von Rastbolzen aufweist, zur Verriegelung der Längsschienen wenigstens ein Rastbolzen in eine Verriegelungsposition eingestellt ist und wobei zur Entriegelung der Längsschienen alle Rastbolzen in einer Entriegelungsposition eingestellt sind.

Solche Verstellvorrichtungen sind allgemein bekannt. Beispielsweise ist aus der Druckschrift DE 42 42 895 C1 eine Verriegelung für eine Längsverstellung eines Sitzes bekannt, bei der ein Betätigungshebel einen Rastbolzen über eine Auflage bewegt, wobei die Auflage als Kurvenbahn zur Einstellung unterschiedlicher Hebelverhältnisse ausgebildet ist. Nachteilig hieran ist, dass ein vergleichsweise komplizierter und damit teuerer Aufbau der Verriegelungseinrichtung vorgeschlagen wird.

Aufgabe der vorliegenden Erfindung ist es daher, eine Verriegelungseinrichtung zu schaffen, bei der durch einen einfachen und kleinen Aufbau zum einen eine sehr kostengünstige Ausgestaltung der Verstelleinrichtung möglich ist, die darüberhinaus auch einen lediglich geringen Bauraumbedarf aufweist, wobei jedoch trotzdem ein Höchstmaß an Präzision der Verriegelung und damit ein Höchstmaß an Komfort hinsichtlich etwaiger Geräuschentwicklungen und ein Höchstmaß an Langlebigkeit und Robustheit der Funktionalität der Verstelleinrichtung über die gesamte Lebensdauer eines Fahrzeugs erzielt wird.
Die Erfindung ist durch die im unabhängigen Anspruch 1 aufgeführten technischen Merkmale definiert; zusätzliche Merckmale bzw. Weiterchildungen der Erfindung sind in den abhängigen Anspruchen angegeben.

Diese Aufgabe wird durch eine Verstelleinrichtung zur Längsverstellung einer Kraftfahrzeugkomponente, insbesondere eines Fahrzeugsitzes, gelöst, wobei die Verstelleinrichtung eine in Verstellrichtung angeordnete obere Längsschiene und eine in Verstellrichtung angeordnete untere Längsschiene aufweist, wobei die Verstelleinrichtung eine Verriegelungseinrichtung derart aufweist, dass durch Verriegelung der Verriegelungseinrichtung eine Relativverstellung der Längsschienen gegeneinander blockierbar ist und durch Entriegelung der Verriegelungseinrichtung die Verriegelung der Längsschienen aufhebbar ist, wobei die Verriegelungseinrichtung eine Mehrzahl von Rastbolzen aufweist, zur Verriegelung der Längsschienen wenigstens ein Rastbolzen in eine Verriegelungsposition eingestellt ist und wobei zur Entriegelung der Längsschienen alle Rastbolzen in einer Entriegelungsposition eingestellt sind, wobei die Rastbolzen eine Verrastkontur derart aufweisen, wobei in einem ersten vorderen Teilstück des Rastbolzens ein Öffnungswinkel vorgesehen ist und wobei in einem zweiten Teilstück des Rastbolzens ein Übergang vorgesehen ist. Der im Zusammenhang der vorliegenden Erfindung betrachtete Öffnungswinkel versteht sich immer in einer Ebene parallel zur Verstellrichtung. Hierdurch kann mit einfachen Mitteln die Verstellvorrichtung besonders klein und leicht (und gerade deshalb besonders stabil bzw. beispielsweise verwindungssteif) hergestellt werden, weil insbesondere ein zur Aktuierung der Rastbolzen vorhandener Hebel in einem Kanalbereich zwischen den Längsschienen drehgelagert werden kann und so eine erhebliche Bauraumerspamis bewirkt. Dies insbesondere deshalb, weil zum einen wegen des geringen Öffnungwinkels der Form des Rastbolzens im ersten Teilstück eine bereits gute Spielverringerung bei der Einstellung der Verriegelungsposition des Rastbolzens möglich ist und weil durch den Übergang im zweiten Teilstück des Rastbolzens sehr schnell der volle Durchmesser des Rastbolzens erreicht wird und damit zum einen lediglich ein geringerer Weg in Richtung der Längserstreckung des Rastbolzens zur kompletten Verriegelung bzw. zur Einstellung der Verriegelungsposition des Rastbolzens notwendig ist. Durch eine solche erfindungsgemäße Formgebung der Rastbolzen kann weiterhin erreicht werden, dass die Rastbolzen eine hohe Stabilität aufweisen und damit eine hohe Widerstandsfähigkeit gegen Scherkräfte aufweisen.

Die Aufgabe wird ferner durch eine Verstelleinrichtung zur Längsverstellung einer Kraftfahrzeugkomponente, insbesondere eines Fahrzeugsitzes, gelöst, wobei die Verstelleinrichtung eine in Verstellrichtung angeordnete obere Längsschiene und eine in Verstellrichtung angeordnete untere Längsschiene aufweist, wobei die Verstelleinrichtung eine Verriegelungseinrichtung derart aufweist, dass durch Verriegelung der Verriegelungseinnchtung eine Relativverstellung der Längsschienen gegeneinander blockierbar ist und durch Entriegelung der Verriegelungseinrichtung die Verriegelung der Längsschienen aufhebbar ist, wobei die Verriegelungseinrichtung eine Mehrzahl von Rastbolzen aufweist, zur Verriegelung der Längsschienen wenigstens ein Rastbolzen in eine Verriegelungsposition eingestellt ist und wobei zur Entriegelung der Längsschienen alle Rastbolzen in einer Entriegelungsposition eingestellt sind, wobei die Mehrzahl von Rastbolzen zur Verriegelung und/oder zur Entriegelung der Längsschienen mittels eines zwischen den Längsschienen drehgelagerten Hebels bewegbar vorgesehen sind. Hierdurch kann in einfacher Weise eine kompakte Ausführung der Verstelleinrichtung bewirkt werden, wodurch sich auch Kostenvorteile ergeben.

Erfindungsgemäß ist besonders bevorzugt, dass die Längsschienen in einer senkrecht zur Verstellrichtung verlaufenden Schnittebene einen runden oder mehreckigen Kanalbereich, insbesondere einen rechteckigen Kanalbereich, umschließen, wobei die Lagerung des Hebels in dem Kanalbereich vorgesehen ist. Hierdurch kann zum einen eine besonders hohe Stabilität der gesamten Schienenanordnung der Längsschienen erzielt werden und es wird ferner Platz zur Anordnung des Hebels zur Bewegung der Rastbolzen geschaffen, so dass die Verstelleinrichtung insgesamt besonders geringe Bauraumanforderungen stellt.

Weiterhin ist erfindungsgemäß bevorzugt, dass die Mehrzahl von Rastbolzen im wesentlichen horizontal geführt vorgesehen sind. Hierdurch kann zum einen wertvoller Bauraum in der vertikalen Z-Richtung eingespart werden und ferner auch die Anbindung der Fahrzeugkomponente, insbesondere des Fahrzeugsitzes, besonders stabil realisiert werden.

Erfindungsgemäß ist weiterhin bevorzugt, dass zur spielfreien Verriegelung der Längsschienen mindestens zwei Rastbolzen in die Verriegelungsposition eingestellt sind. Durch das gleichzeitige Noniusprinzip zwischen Rastbolzen und Langlöchern in einer der Längsschienen wird gewährleistet, dass in jeder Position eine - wenn auch spielbehaftete - Verriegelung der Längsschienen zumindest möglich ist, so dass ein hohes Maß an Sicherheit bei der erfindungsgemäßen Verstelleinrichtung realisierbar ist.

Ferner ist erfindungsgemäß bevorzugt, dass eine spielfreie Verriegelung der Längsschienen mit einer Inkrementverschiebung von etwa 2 mm bis etwa 10 mm, bevorzugt von etwa 3 mm bis etwa 6 mm, besonders bevorzugt von etwa 4,5 mm bis etwa 5,0 mm möglich ist. Hierdurch kann den Komfortanforderungen eines Benutzers des Kraftfahrzeugsitzes genüge getan werden, wonach eine kleinteilige Staffelung der möglichen Einstellpositionen des Fahrzeugsitzes mit spielfreier Verriegelung möglich ist. Weiterhin ist auch bevorzugt, dass die Bewegung des Rastbolzens bei gleicher Drehung des Hebels an der Verriegelungsposition des Rastbolzens größer ist als an der Entriegelungsposition des Rastbolzens. Hierdurch kann mit einfachen erreicht werden, dass die Betätigungskraft zur Betätigung des Hebels (in Richtung der Entriegelungsposition des bzw. der Rastbolzen) im wesentlichen gleich bleibt oder jedenfalls nicht zu sehr ansteigt, etwa deshalb, weil eine Mehrzahl von Rastbolzen (gegen jeweils eine Federkraft) in Richtung zur Entriegelungsposition bewegt werden.

Ausführungsbeispiele der Erfindung sind in der Zeichnung dargestellt und in der nachfolgenden Beschreibung näher erläutert.
- Figur 1: zeigt eine perspektivische Darstellung einer erfindungsgemäßen Verstelleinrichtung
- Figur 2: zeigt eine perspektivische Detaildarstellung der erfindungsgemäßen Verstelleinrichtung.
- Figur 3: zeigt eine Detaildarstellung einer Anordnung von Rastbolzen der erfindungsgemäßen Verstelleinrichtung.
- Figuren 4 und 5: zeigen jeweils eine Schnittdarstellung der Verstelleinrichtung in einer Ebene senkrecht zur Verstellrichtung.
- Figur 6: zeigt eine weiter vergrößerte Detaildarstellung des vorderen Bereichs eines Rastbolzens.

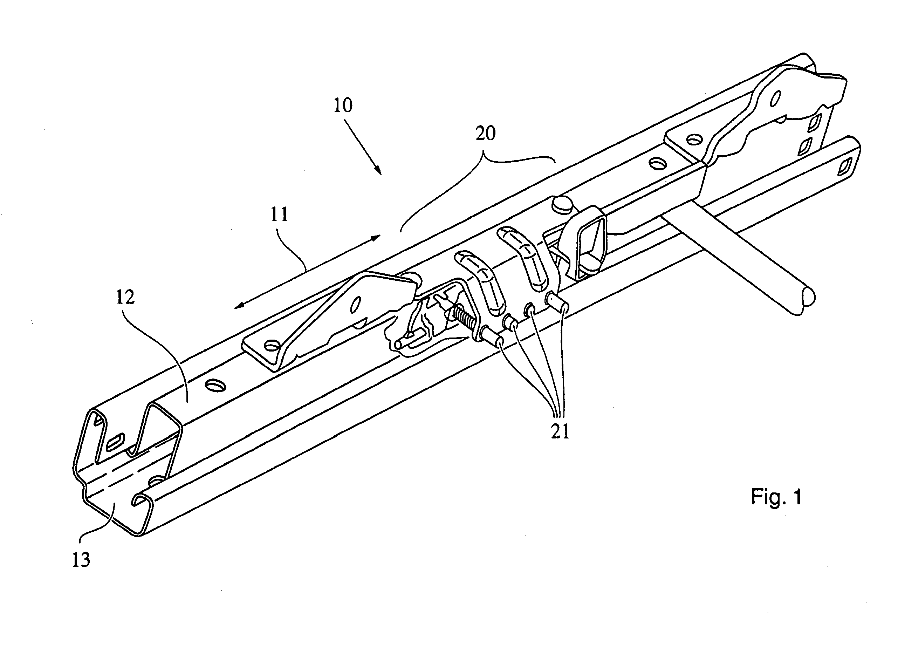

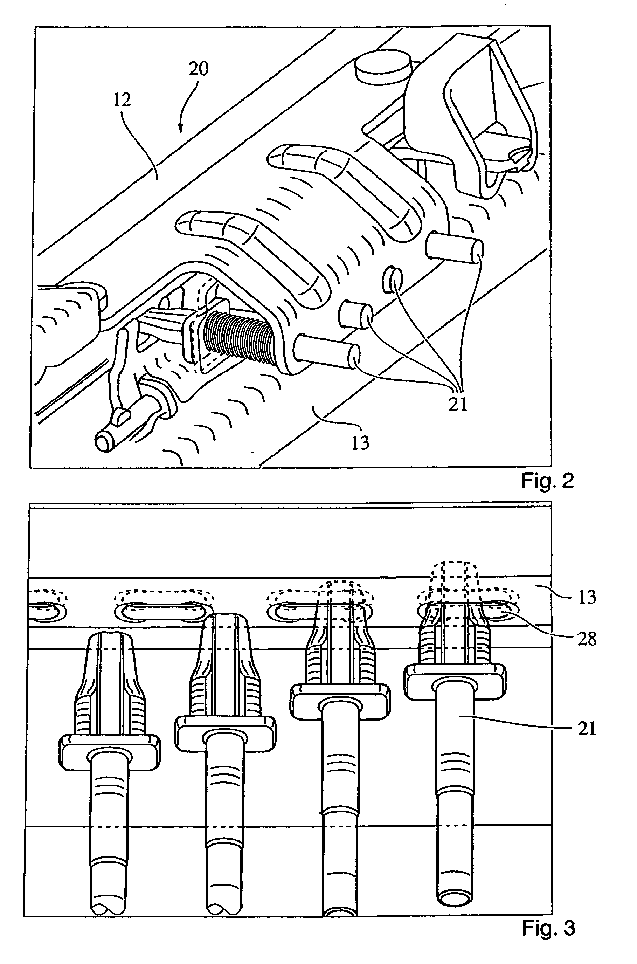

In Figur 1 ist eine erfindungsgemäße Verstelleinrichtung 10 mit einer oberen Längsschiene 12 und einer unteren Längsschiene 13 in einer perspektivischen Darstellung dargestellt. Die Längsschienen 12, 13 sind im wesentlichen in einer Verstellrichtung 11 längserstreckt vorgesehen, so dass eine Verstellbewegung einer mit der oberen Längsschiene 12 fest verbundenen Kraftfahrzeugkomponente (insbesondere ein Fahrzeugsitz) relativ zu einer mit der unteren Längsschiene 13 fest verbundene Kraftfahrzeugkomponente, insbesondere das Chassis des Fahrzeugs entlang der Verstellrichtung 11 möglich ist. Die Verstelleinrichtung 10 weist ferner eine Verriegelungseinrichtung 20 auf, welche wenigstens einen, in der Praxis jedoch eine Mehrzahl - insbesondere vier - Verriegelungsbolzen 21 bzw. Rastbolzen 21 aufweist. Diese Rastbolzen 21 sind in eine Entriegelungsposition einstellbar und in eine Verriegelungsposition einstellbar. Die Bewegung der Rastbolzen 21 zwischen der Entriegelungsposition und der Verriegelungsposition ist im wesentlichen eine lineare Bewegung. Diese Bewegung wird durch einen drehgelagerten Hebel 25 angetrieben. Dieser wiederum wird über einen nicht näher dargestellten Betätigungshebel angetrieben, der seinerseits von einem Benutzer der Verstelleinrichtung manuell betätigt wird oder aber auch mittels eines Aktuators (nicht dargestellt) betätigt werden kann. Eine vergrößerte Darstellung des Bereichs der Verriegelungseinrichtung 20 ist in Figur 2 in ebenfalls einer perspektivischen Darstellung dargestellt.

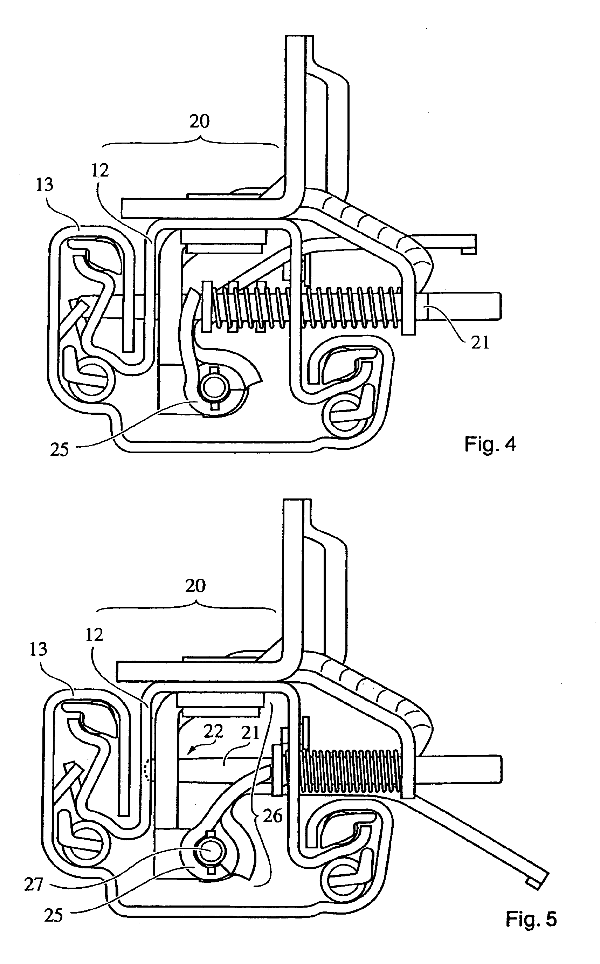

Erfindungsgemäß ist insbesondere vorgesehen, dass der drehgelagerte Hebel 25 in einem Kanalbereich zwischen den Längsschienen 12, 13 drehgelagert ist. Dieser Sachverhalt ist besonders gut in den Figuren 4 und 5 zu sehen. Diese beiden Figuren stellen Schnittdarstellungen durch die Verstelleinrichtung 10 im Bereich der Verriegelungseinrichtung 20 in einer zur Verstellrichtung im wesentlichen senkrecht stehenden Schnittebene dar. Hierbei wird in Figur 4 die Verriegelungsposition des Rastbolzens 21 dargestellt und in Figur 5 wird die Entriegelungsposition des Rastbolzens 21 dargestellt. Erkennbar ist insbesondere in Figur 5, dass der Rastbolzen 21 eine Verriegelungskontur 22 aufweist und dass der Hebel 25 im Kanalbereich 26 an einer Drehachse 27 drehgelagert ist, um die Bewegung des Rastbolzens 21 zwischen der Verriegelungsposition und der Entriegelungsposition zu bewerkstelligen. In der Regel ist hierbei der Rastbolzen 21 durch jeweils eine Feder in eine Position federvorbelastet, insbesondere in die Verriegelungsposition (Figur 4). Alternativ zu einer Feder pro Rastbolzen kann erfindungsgemäß vorgesehen sein (nicht dargestellt), dass eine gemeinsame Feder alle Rastbolzen 21 beaufschlagen, insbesondere eine Blattfeder.

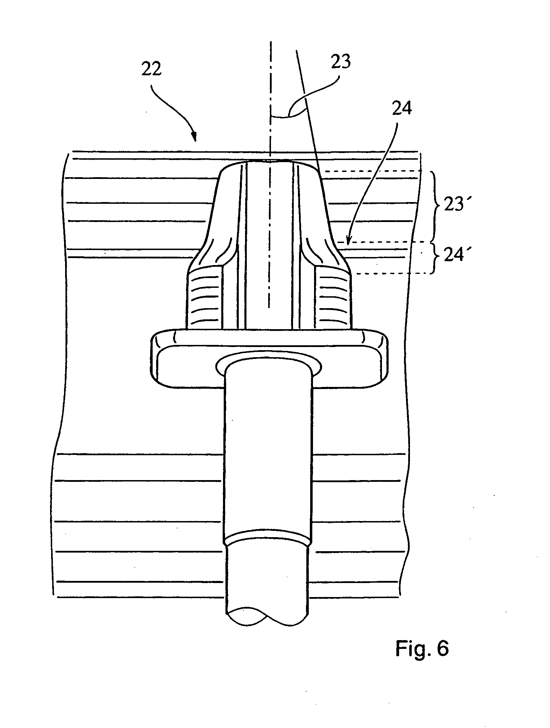

Die Verrastkontur 22 der Rastbolzen 21 wird nachfolgend anhand der Figuren 3 und 6 näher erläutert. In Figur 3 ist hierbei eine schematische und perspektivische Darstellung der Anordnung der Rastbolzen 21 in Bezug auf in der unteren Längsschiene 13 vorhandene Langlöcher 28 dargestellt. Hierbei ist es so, dass die Langlöcher 28 und die Rastbolzen relativ zueinander derart angeordnet und beabstandet sind, dass in jeder beliebigen Einstellposition der Längsschienen 12, 13 zueinander ein Eingriff wenigstens eines Rastbolzens 21 in ein Langloch 28 möglich ist. Aufgrund der Formgebung der Langlöcher 28 ist jedoch dadurch allein noch keine spielfreie Verriegelung der Längsschienen 12, 13 möglich; hierzu ist der Eingriff eines weiteren Rastbolzens 21 notwendig. Eine solche spielfreie Verriegelung der Längsschienen 12, 13 ist lediglich in bestimmten, durch Inkrementverschiebungen voneinander beabstandeten Relativpositionen der Längsschienen 12, 13 zueinander möglich, wodurch sich eine Rasterung ergibt. In Figur 6 ist die Verrastkontur 22 eines einzelnen der Rastbolzen 21 in vergrößerter Darstellung wiedergegeben. Hieraus ist ersichtlich, dass der Rastbolzen in seinem vorderen Bereich, d.h. seinem Bereich, der zur Verriegelung mit der unteren Längsschiene 13 herangezogen wird, in einem ersten Teilstück 23' einen ersten kleineren Öffnungswinkel 23 aufweist und in einem zweiten Teilstück 24' einen zweiten größeren Öffnungswinkel 24 oder aber eine Stufe (nicht dargestellt) aufweist. Der Öffnungswinkel liegt bevorzugt im Bereich von etwa 5° bis etwa 40°, besonders bevorzugt im Bereich von etwa 10° bis etwa 25°, ganz besonders bevorzugt im Bereich von etwa 15° bis etwa 20°. Im Anschluss an das zweite Teilstück 24' der Verrastkontur 22 verschwindet der Öffnungswinkel im wesentlichen ganz. In einer Richtung senkrecht zur Verstellrichtung 11 kann der Rastbolzen eine Ausnehmung oder eine Nut aufweisen, die - insbesondere beidseitig ausgeführt (Oberseite, Unterseite) - zur Führung (mittels entsprechender nicht dargestellter Nasen) vorgesehen ist.

Im dargestellten Ausführungsbeispiel ist die Verstelleinrichtung 10 derart vorgesehen, dass die Verriegelungseinrichtung 20 (und damit die Rastbolzen 21) an der oberen Längsschiene 12 angeordnet ist und die Verrastkontur 22 mit Langlöchern 28 in der unteren Längsschiene 13 verrastet, jedoch ist erfindungsgemäß auch eine umgekehrte Anordnung möglich.

### Bezugszeichenliste

- 10: Verstelleinrichtung
- 11: Verstellrichtung
- 12: obere Längsschiene
- 13: untere Längsschiene
- 20: Verriegelungseinrichtung
- 21: Rastbolzen
- 22: Verrastkontur
- 23: Öffnungswinkel
- 23': erstes Teilstück
- 24: Übergang
- 24': zweites Teilstück
- 25: drehgelagerter Hebel
- 26: Kanalbereich
- 27: Drehachse des Hebels
- 28: Langlöcher der unteren Längsschiene

## Patentansprüche

1. Verstelleinrichtung (10) zur Längsverstellung einer Kraftfahrzeugkomponente, insbesondere eines Fahrzeugsitzes, wobei die Verstelleinrichtung (10) eine in Verstellrichtung (11) angeordnete obere Längsschiene (12) und eine in Verstellrichtung (11) angeordnete untere Längsschiene (13) aufweist, wobei die Verstelleinrichtung (10) eine Verriegelungseinrichtung (20) derart aufweist, dass durch Verriegelung der Verriegelungseinrichtung (20) eine Relatiwerstellung der Längsschienen (12, 13) gegeneinander blockierbar ist und durch Entriegelung der Verriegelungseinrichtung (20) die Verriegelung der Längsschienen (12, 13) aufhebbar ist, wobei die Verriegelungseinrichtung (20) eine Mehrzahl von Rastbolzen (21) aufweist, zur Verriegelung der Längsschienen (12, 13) wenigstens ein Rastbolzen (21) in eine Verriegelungsposition eingestellt ist und wobei zur Entriegelung der Längsschienen (12, 13) alle Rastbolzen (21) in einer Entriegelungsposition eingestellt sind, wobei die Rastbolzen eine Verrastkontur (22) derart aufweisen, dass in einem ersten vorderen Teilstück (23') des Rastbolzens (21) ein Öffnungswinkel (23) vorgesehen ist und dass in einem zweiten Teilstück (24') des Rastbolzens (21) ein Übergang (24) vorgesehen ist, **dadurch gekennzeichnet, dass** die Mehrzahl von Rastbolzen (21) zur Verriegelung und/oder zur Entriegelung der Längsschienen (12, 13) mittels eines zwischen den Längsschienen (12, 13) drehgelagerten Hebels (25) bewegbar vorgesehen sind.

2. Verstelleinrichtung (10) nach einem der vorhergehenden Ansprüche, **dadurch gekennzeichnet, dass** die Längsschienen (12, 13) in einer senkrecht zur Verstellrichtung (11) verlaufenden Schnittebene ein runden oder mehreckigen Kanalbereich, insbesondere einen rechteckigen Kanalbereich, umschließen, wobei die Lagerung des Hebels (25) in dem Kanalbereich vorgesehen ist.

3. Verstelleinrichtung (10) nach einem der vorhergehenden Ansprüche, **dadurch gekennzeichnet, dass** die Mehrzahl von Rastbolzen (21) im wesentlichen horizontal geführt vorgesehen sind.

4. Verstelleinrichtung (10) nach einem der vorhergehenden Ansprüche, **dadurch gekennzeichnet, dass** zur spielfreien Verriegelung der Längsschienen (12, 13) mindestens zwei Rastbolzen (21) in die Verriegelungsposition eingestellt sind.

5. Verstelleinrichtung (10) nach einem der vorhergehenden Ansprüche, **dadurch gekennzeichnet, dass** eine spielfreie Verriegelung der Längsschienen (12, 13) mit einer Inkrementverschiebung von etwa 2 mm bis etwa 10 mm, bevorzugt von etwa 3 mm bis etwa 6 mm, besonders bevorzugt von etwa 4,5 mm bis etwa 5,0 mm möglich ist.

6. Verstelleinrichtung (10) nach einem der vorhergehenden Ansprüche, **dadurch gekennzeichnet, dass** die Bewegung des Rastbolzens (21) bei gleicher Drehung des Hebels (25) an der Verriegelungsposition des Rastbolzens (21) größer ist als an der Entriegelungsposition des Rastbolzens (21).

## Claims

1. Adjusting device (10) for the longitudinal adjustment of an automotive component, in particular of a vehicle seat, the adjusting device (10) comprising an upper longitudinal rail (12) arranged in the direction of adjustment (11) and a lower longitudinal rail (13) arranged in the direction of adjustment (11), the adjusting device (10) comprising a locking device (20), such that by locking the locking device (20) a relative adjustment of the longitudinal rails (12, 13) in relation to each other may be blocked, and by unlocking the locking device (20) the longitudinal rails (12, 13) may be unblocked, the locking device (20) comprising a plurality of detent pins (21), at least one detent pin (21) being set in a locked position to lock the longitudinal rails (12, 13) and all detent pins (21) being set in an unlocked position to unlock the longitudinal rails (12, 13), the detent pins comprising a detent profile (22) such that in a first front section (23') of the detent pin (21) a flare angle (23) is provided and that in a second section (24') of the detent pin (21) a transition (24) is provided, **characterized in that** the plurality of detent pins (21) are provided to be mobile for locking and/or unlocking the longitudinal rails (12, 13) by means of a lever (25) rotatably mounted between the longitudinal rails (12, 13).

2. Adjusting device (10) according to Claim 1, **characterized in that** in a sectional plane extending perpendicular to the direction of adjustment (11) the longitudinal rails (12, 13) encompass a round or polygonal channel region, in particular a rectangular channel region, the mounting of the lever (25) being provided in the channel region.

3. Adjusting device (10) according to one of the preceding claims, **characterized in that** the plurality of detent pins (21) are provided guided substantially horizontally.

4. Adjusting device (10) according to one of the preceding claims, **characterized in that** for the locking of the longitudinal rails (12, 13) without clearance at least two detent pins (21) are set in the locked position.

5. Adjusting device (10) according to one of the preceding claims, **characterized in that** it is possible to lock the longitudinal rails (12, 13) without clearance with an incremental displacement of approximately 2 mm to approximately 10 mm, preferably of approximately 3 mm to approximately 6 mm, particularly preferably of approximately 4.5 mm to approximately 5.0 mm.

6. Adjusting device (10) according to one of the preceding claims, **characterized in that** the movement of the detent pin (21) with the same rotation of the lever (25) in the locked position of the detent pin (21) is greater than in the unlocked position of the detent pin (21).

## Revendications

1. Dispositif de réglage (10) pour le réglage longitudinal d'un composant de véhicule automobile, en particulier d'un siège de véhicule, le dispositif de réglage (10) présentant un rail longitudinal supérieur (12) disposé dans la direction de réglage (11) et un rail longitudinal inférieur (13) disposé dans la direction de réglage (11), le dispositif de réglage (10) présentant un dispositif de verrouillage (20) de telle sorte que, par verrouillage du dispositif de verrouillage (20), un réglage relatif des rails longitudinaux (12, 13) l'un par rapport à l'autre puisse être bloqué et, par déverrouillage du dispositif de verrouillage (20), le verrouillage des rails longitudinaux (12, 13) puisse être supprimé, le dispositif de verrouillage (20) présentant une pluralité de boulons d'encliquetage (21), pour le verrouillage des rails longitudinaux (12, 13), au moins un boulon d'encliquetage (21) étant ajusté dans une position de verrouillage, et pour le déverrouillage des rails longitudinaux (12, 13), tous les boulons d'encliquetage (21) étant ajustés dans une position de déverrouillage, les boulons d'encliquetage présentant un contour d'encliquetage (22), de telle sorte que dans une première pièce partielle avant (23') du boulon d'encliquetage (21), un angle d'ouverture (23) soit prévu, et que dans une deuxième pièce partielle (24') du boulon d'encliquetage (21), une transition (24) soit prévue, **caractérisé en ce que** la pluralité de boulons d'encliquetage (21) pour le verrouillage et/ou pour le déverrouillage des rails longitudinaux (12, 13) sont prévus de manière déplaçable au moyen d'un levier (25) monté à rotation entre les rails longitudinaux (12, 13).

2. Dispositif de réglage (10) selon la revendication 1, **caractérisé en ce que** les rails longitudinaux (12, 13) entourent, dans un plan de coupe s'étendant perpendiculairement à la direction de réglage (11), une région de canal ronde ou polygonale, en particulier une région de canal rectangulaire, le support sur palier du levier (25) étant prévu dans la région de canal.

3. Dispositif de réglage (10) selon l'une quelconque des revendications précédentes, **caractérisé en ce que** la pluralité de boulons d'encliquetage (21) est prévue de manière guidée essentiellement horizontalement.

4. Dispositif de réglage (10) selon l'une quelconque des revendications précédentes, **caractérisé en ce que** pour le verrouillage sans jeu des rails longitudinaux (12, 13), au moins deux boulons d'encliquetage (21) sont ajustés dans la position de verrouillage.

5. Dispositif de réglage (10) selon l'une quelconque des revendications précédentes, **caractérisé en ce qu'**un verrouillage sans jeu des rails longitudinaux (12, 13) est possible avec un déplacement incrémental d'environ 2 mm à environ 10 mm, de préférence d'environ 3 mm à environ 6 mm, particulièrement préférablement d'environ 4,5 mm à environ 5,0 mm.

6. Dispositif de réglage (10) selon l'une quelconque des revendications précédentes, **caractérisé en ce que** le déplacement du boulon d'encliquetage (21) pour une même rotation du levier (25) est plus important au niveau de la position de verrouillage du boulon d'encliquetage (21) qu'au niveau de la position de déverrouillage du boulon d'encliquetage (21).
